# EUROPÄISCHE PATENTSCHRIFT

(11) **EP 2 843 361 B1**
(45) Veröffentlichungstag und Bekanntmachung des Hinweises auf die Patenterteilung: **21.11.2018**
(21) Anmeldenummer: 14176842.4
(22) Anmeldetag: 14.07.2014
(51) Int. Cl.: G01B 11/24, G01S 17/32

(54) **Verfahren zur Vermessung der Fahrdrahthöhen und -seitenlage der Oberleitung eines Gleises**
Method for measuring the contact wire heights and side position of the overhead wire of a track
Procédé destiné à mesurer la hauteur et le côté latéral de fil conducteur du caténaire d'un rail

(30) Priorität: 28.08.2013 DE 102013217160
(43) Veröffentlichungstag der Anmeldung: 04.03.2015
(73) Patentinhaber: Deutsche Bahn AG, 10785 Berlin (DE)
(72) Erfinder: Finner, Lars, 82061 Neuried (DE); Schüßler, Stefan, 83512 Reitmehring (DE)
(74) Vertreter: Zinken-Sommer, Rainer

(56) Entgegenhaltungen:
- DE-A1- 19 850 118
- US-A1- 2003 142 297
- MUELLER R ET AL: "FAHRWEGUEBERWACHUNG MIT OPTISCHER MESSTECHNIK", EISENBAHN INGENIEUR KALENDER, XX, XX, 1. Januar 1996 (1996-01-01), Seiten 315-322, XP000892569,

## Beschreibung

Die Erfindung betrifft ein Verfahren zur Vermessung der Fahrdrahthöhen und - seitenlage der Oberleitung eines Gleises, wobei mittels eines rotierenden Spiegels eines Fächerlaser das Umgebungsprofil innerhalb eines Abtastwinkels erfasst und nach jedem Rundumscan durch den Scanner ein Datentelegramm mit Winkel und Abstandswert von erkannten Oberflächen oder Objekten erstellt wird.

Das Schienennetz allein in Deutschland weist zurzeit rund 45 000 Gleiskilometer auf, welches mit elektrischen Oberleitungen ausgestattet ist.

Das zuverlässige Zusammenwirken von Stromabnehmer und Oberleitung ist unabdingbar für einen wirtschaftlichen und störungsfreien elektrischen Bahnbetrieb, vor allem bei hohen Geschwindigkeiten. Das Vorhalten der Oberleitungsanlagen in einem qualitativ hochwertigen Zustand erfordert einen erheblichen Aufwand. Für eine hohe Qualität der Oberleitungsanlagen ist eine regelmäßige Inspektion und Diagnose erforderlich, bereits im Frühstadium Fehlstellen zu erkennen und beheben zu können. Hierfür werden die Strecken regelmäßig befahren und inspiziert. Bei diesen Messfahrten werden folgende Werte gemessen:
- Lage der ein- und auslaufenden Kettenwerke
- Neigung der Stützrohre und Seitenhalter
- Fahrdrahthöhen- und Seitenlage
- Fahrdrahtstärke und
- Kontaktkraft zwischen Schleifstück des Stromabnehmers und Fahrdraht.

Für die Messungen sind automatisierte Mess-, Inspektions- und Diagnosefahrten erforderlich. Bekannt sind hierfür optische Messverfahren, die sich in zwei Grundprinzipien einteilen lassen:
- Berührungslose Messung: Die Sensorik ist auf dem Dach des Messfahrzeuges montiert, es gibt keinen mechanischen Kontakt zur Oberleitung.
- Berührende Messung: Die Sensorik ist an einem Stromabnehmer oder einem anderen Gerät montiert, das den Fahrdraht berührt.

Fahrdrahtlage und -stärke werden bislang durch Triangulation mittels hochauflösender Zeilenkameras oder mittels Lasertechnik vermessen. Die Kameras sind dabei so justiert, dass ihr optisches Blickfeld die Fahrdrahtebene rechtwinklig schneidet und das gesamte Messfeld erfasst. Zwei weitere Kameras können die Störsicherheit der Anlage erhöhen. Diese sollen Übersteuerungen bei Sonneneinstrahlung oder wegen störender Objekte, wie Bäume etc. ausschließen.

Bei mehreren in nahezu gleicher Höhe parallel verlaufenden Fahrdrähten, was z. B. in den Überlappungsbereichen und/oder bei Doppelfahrdrahtsystemen auftritt, kann nur ein Gesamtschatten erfasst werden, ohne über die zu prüfende Resthöhe des einzelnen Fahrdrahtes eine Aussage machen zu können.

Eine andere bekannte Ausführung einer einschlägigen Vorrichtung ist in DE 297 16 560 U1 und DE 196 13 737 C2 beschrieben. Die Lichtquelle und die Kamera sind dort in einer U-förmigen Vorrichtung angeordnet, wobei Lichtquelle und Kamera sich in den Schenkeln des U befinden. Der Fahrdraht verläuft dann zwischen diesen Schenkeln. Da der Fahrdraht jedoch in der Regel längs des Schienenweges bei meistens konstanter Höhe seine seitliche Position ändert, d. h. im Zickzack verlaufend aufgehängt ist, ist bei diesen Verfahren ein ständiges mechanisches Nachführen der Messvorrichtung quer zur Fahrtrichtung unumgänglich. Dies führt dazu, dass die Maximalgeschwindigkeit des Messfahrzeuges erheblich eingeschränkt ist.

Bekannt ist ein Verfahren zur Fahrdrahtanhubmessung bei dem eine optische Messeinrichtung außerhalb des Gefahrenbereiches und des Oberleitungsbereiches eines Gleises installiert und kalibriert wird (DE 10 2006 031 487 B4). Dieses Verfahren ist nicht auf einem Messfahrzeug anwendbar.

Die DE 100 44 432 A1 beschreibt ein Verfahren für die automatische Erfassung des Verschleißes der Fahrdrähte von Oberleitungen für elektrisch angetriebene Fahrzeuge, die auf einem Fahrzeug an einem Ort verschieden vom Stromabnehmer angeordnet ist. Zur Scharfstellung der Abbildung des Fahrdrahtes ist trotz unterschiedlicher Höhenlagen eine Korrektur ausgehend von der Scheimpflug-Regel vorgesehen, für die spezielle Korrekturmaßnahmen installiert sind und angewendet werden.

Die DE 198 50 118 A1 beschreibt ein Profilmeßsystem und ein Verfahren zur Durchführung desselben, wobei sich das Meßsystem in Richtung der Längserstreckung des Objektes bewegt und folgendes aufweist:
- mindestens ein FMCW-Laser-Radar zur Abtastung des zu vermessenden Profiles der Objektoberfläche mit mindestens einem Laserstrahl,
- einen Drehspiegel, der ein Meßfenster am Objekt positioniert,
- mindestens einen eindimensional auflösenden Photodetektor und
- eine Auswerteeinheit zur Berechnung von ortsaufgelösten Profilschnitten des Objektes.

Die US2003/142297 A1 nutzt das Lichtschnittverfahren zur Vermessung der Oberleitung. Ein Linienlaser projiziert dabie eine Linie auf die Oberleitung. Die Linie wird mit einer Videokamera gefilmt. Bildverarbeitungsalgorithmen rekonstruieren daraus das Profil und die Position des Fahrdrahts.

Im Eisenbahn Ingenieur Kalender vom 01. Januar 1996, Artikel "Fahrwegeüberwachung mit optischer Messtechnik" vom Rene Müller und Heinrich Höfler wird ein schnelles laserbasiertes Entfernungsmeßverfahren beschrieben. Es beruht darauf, dass die Laufzeit eines Laserstrahls zu einem Objekt und zurück zum Meßgerät gemessen wird. Um die notwendigen hohen Meßraten und trotzdem hohe Genauigkeiten zu erhalten, erfolgt die Laufzeitmessung des Laserstrahles nicht direkt über eine Zeitmessung sondern durch die Erfassung des Phasenlage eines intensitätsmodulierten Laserstrahls.

Letztendlich beschreibt die DE 24 40 085 A1 eine Einrichtung zur berührungslosen Messung der Höhe und Seitenlage des Fahrdrahtes bei elektrischen Bahnen, wobei an einem Distanzstück auf dem Wagendach eines Schienenfahrzeuges in einer festen Entfernung voneinander in zwei Sensorgehäusen fotoelektrische Sensoren so angeordnet sind, dass sie einen bestimmten Winkel bilden, und dass in Verbindung mit dem Distanzstück eine elektronische Messwertverarbeitungseinheit vorgesehen ist, welcher die Signale von den fotoelektrischen Sensoren zugeleitet werden.

Der bekannte Stand der Technik weist folgende Nachteile auf:
- die Messfahrten können oftmals nicht bei hoher Geschwindigkeit durchgeführt werden,
- die Wankbewegungen des Wagenkastens werden nicht oder unzureichend ausgeglichen und verfälschen das Messergebnis,
- das Sonnenlicht blendet die Kamera oder den Laser/Scanner und verursacht Fehler in der Messung,
- andere Objekte wie Regentropfen oder Schneeflocken die optischen Sensoren stören und Fehler in der Messung verursachen,
- neue Fahrdrähte werden nicht oder unzureichend erkannt,
- Streckentrennungen werden nicht oder unzureichend erkannt,

Der Erfindung liegt die Aufgabe zugrunde, ein Verfahren zu entwickeln, welches bei hohen Geschwindigkeiten einsetzbar ist, bei Sonneneinstrahlung keine Messwertverfälschungen aufweist, unterschiedliche Fahrdrahtgegebenheiten erkennt und Wankbewegungen des Wagenkastens ausgleicht. Erfindungsgemäß wird dies durch ein Verfahren nach Anspruch 1 erreicht.

**Suche nach neuen Fahrdrähten:** Ein neuer Fahrdraht wird erst in die Fahrdrahtmatrix¹ übernommen, sofern dieser bei mindestens drei der letzten fünf Scans erkannt wurde². Auf diese Weise wird verhindert, dass z. B. Regentropfen oder Schneeflocken innerhalb des Erwartungsfensters für den Fahrdraht fälschlicherweise als solcher interpretiert werden. Zudem werden auf diese Weise neu erkannte Fahrdrähte zunächst nur "optional" nachverfolgt, bis eine bestimmte Menge an Messpunkten für den Fahrdraht aufgenommen wurde. Erst danach sind die Bedingungen erfüllt, dass ein neuer, optionaler Fahrdraht auch zu einem "gültigen Fahrdraht" wird.

Zusätzliche Fahrdrähte werden nur dann hinzugefügt, wenn diese mindestens 15 cm vom nächstgelegenen Fahrdraht entfernt verlaufen. Die Erfahrungen aus den ersten Testmessungen haben gezeigt, dass die Lagedaten ein und desselben Fahrdrahts von Scan zu Scan um bis zu 10 cm (Summe aus dx und dy) variieren können. Um zusätzliche Fahrdrähte sicher zu detektieren und zuzuordnen, muss deren Abstand dementsprechend größer sein.

Werden mehr als vier Fahrdrähte innerhalb des Erwartungsfensters detektiert, so werden nur die vier niedrigsten in der Fahrdrahtmatrix gespeichert.

**Bestimmung des Hauptfahrdrahts:** Unter den in der Fahrdrahtmatrix gespeicherten Fahrdrähten wird der niedrigste Fahrdraht ermittelt. Für den Hauptfahrdraht gilt als weitere Bedingung, dass dessen Zickzackauslenkung x maximal ±65 cm (=maximaler Fahrdrahtzickzack + Toleranz) betragen darf. Beim Hauptfahrdraht handelt es sich um denjenigen Fahrdraht, der auf der Schleifleiste des Stromabnehmers aufliegt und über den somit die Stromzuführung erfolgt.

Um im Bereich einer Streckentrennung mit zwei parallel verlaufenden Fahrdrähten häufiges Hin- und Herspringen zwischen den Fahrdrähten zu vermeiden, kommt beim Übergang von einem auf den nächsten Hauptfahrdraht eine Hysteresefunktion zum Einsatz.

Sobald ein Hauptfahrdraht bestimmt wurde, wird die Selektion relevanter Objekte zusätzlich eingeschränkt, so dass nur noch Messpunkte in die Betrachtung einfließen, die sich maximal 10 cm oberhalb des Hauptfahrdrahts befinden.

**Visualisierung und Datenausgabe:** Entsprechend den Kundenwünschen können die Fahrdrahtlagedaten im Fenster der Bedienoberfläche visualisiert, über eine Port/Socket-Verbindung digital oder über einen BNC-Anschluss auch analog ausgegeben werden.

**Wankkompensation / Verknüpfung mit Zeitstempeln oder Verortungssystemen (optional):** Mittels der digitalen und analogen Schnittstellen ist das System zur Fahrdrahtlagebestimmung mit anderen Softwaremodulen koppelbar. Um beispielsweise die tatsächliche Lage des Fahrdrahts relativ zur Schienenoberkante bestimmen zu können, sind die Wankbewegungen des Wagenkastens, auf dem der Fächerlaser montiert ist, zu messen und durch einen entsprechenden Algorithmus zu kompensieren.

Des Weiteren besteht die Möglichkeit, die Fahrdrahtlagedaten um hoch genaue Zeitstempel oder Positionsangaben einer Wegmesseinrichtung zu ergänzen. Die dazu erforderlichen Zeit- oder Wegindizes sind über entsprechend zu konfigurierende Schnittstellen einzulesen.

Sofern während der Messung die Rohdaten des Fächerlasers aufgezeichnet wurden, lassen sich daraus offline die Fahrdrahtlagedaten ermitteln und in eine Textdatei exportieren. Dabei kommt stets der gleiche Algorithmus zum Einsatz, wie während der Messung. Dementsprechend gibt es keinen Unterschied, ob die Bestimmung der Fahrdrahtlage online während der Messung oder offline nach Abschluss der Messfahrt erfolgt.

Für den Datenexport stehen verschiedene Modi zur Verfügung die im Folgenden näher erläutert werden.

### Singlefahrdraht

In diesem Modus werden ausschließlich die Lagedaten des niedrigsten Fahrdrahts (Hauptfahrdraht) exportiert.

| **Syntax:** | Streckenkilometer [km] | {TAB} Zickzack [mm] | {TAB} Höhenlage [mm] |
|---|---|---|---|
| **Beispiel:** | 12.87.40 | 52 | 5651 |

### Multifahrdraht

In diesem Modus werden die Lagedaten von bis zu vier Fahrdrähten ausgegeben, die sich innerhalb des Erwartungsfensters (-0,85 m < x < 0,85 m; 4,5 m < y < 7,0 m) befinden.

Neben dem Hauptfahrdraht (= niedrigster Fahrdraht) werden weitere Fahrdrähte nur dann erfasst und ausgegeben, wenn diese bis maximal 10 cm oberhalb des Hauptfahrdrahts verlaufen.

Nach jedem Scanzyklus versucht das Programm, die Lagedaten für sämtliche Fährdrähte zu aktualisieren. Wurde ein Fahrdraht häufiger als zehn Mal nicht erfasst, wird dieser aus der Fahrdrahtmatrix gelöscht. Für nicht vorhandene Fahrdrähte werden die Defaultkoordinaten
x = -1000 und y = 7000 gesetzt (Fahrdraht 4).

### Anbindung an eine Wankmesseinrichtung (Wankkompensation)

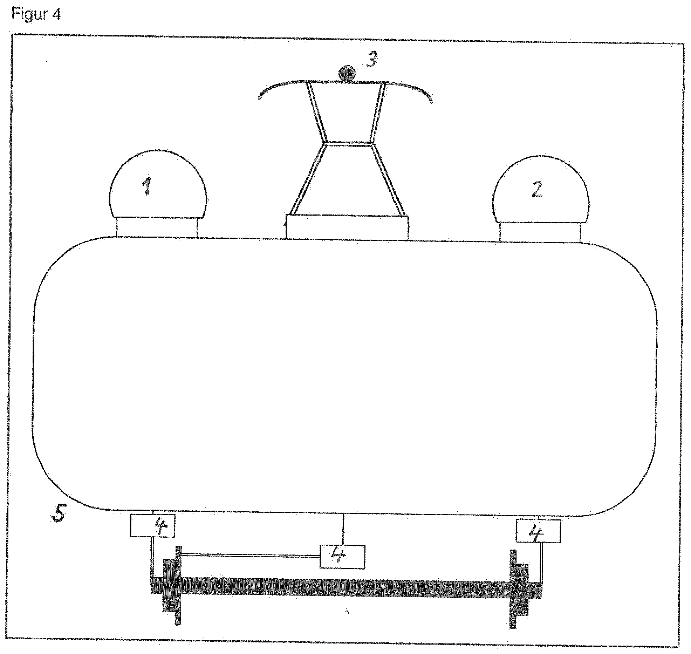

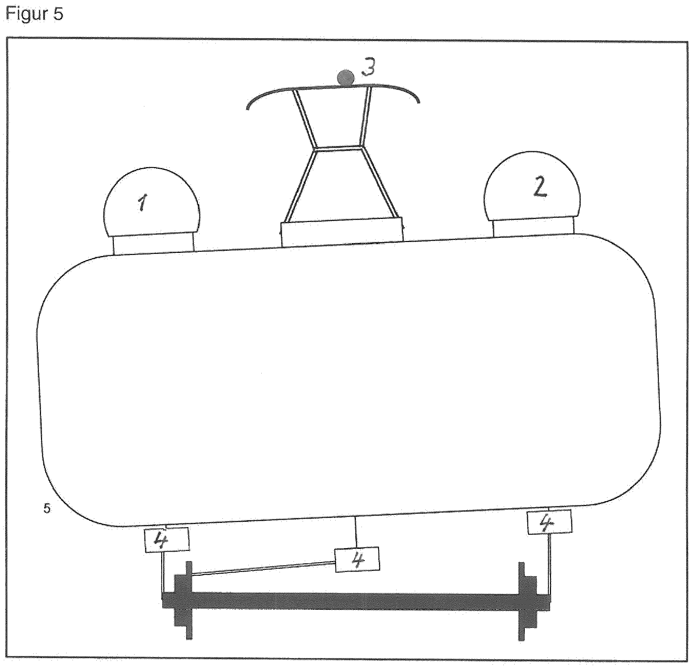

Der Fächerlaser kann die Fahrdrahtlage grundsätzlich nur relativ zu seiner eigenen Position ermitteln, also in der Regel in Bezug auf das Fahrzeugdach. Da das Fahrzeug in Kurven wankt, ergibt sich daraus ein systematischer Fehler, wenn sich der Fahrzeugkasten unter dem Fahrdraht hin und her bewegt (siehe Figur 4 und Figur 5). Sofern man die Fahrdrahtlage relativ zur Schienenoberkante bestimmen möchte, müssen die Wankbewegungen des Fahrzeugs berücksichtigt und die Koordinaten des Fahrdrahts dementsprechend korrigiert werden. Zu diesem Zweck sind die Bewegungen des Fahrzeugkastens relativ zum Radsatz zu messen, um die entsprechenden Abweichungen berechnen zu können.

Die mittels der Wanksensoren ermittelten Bewegungen des Wagenkastens werden von dem Datenverarbeitungsprogramm MR32 (Messrechner 32 Messkanäle) erfasst und daraus die Position der Fächerlaser relativ zur Schienenoberkante bestimmt. Der *Contact Wire Scanner* wiederum meldet die von ihm berechneten Fahrdrahtlagedaten über eine Port/Socket-Verbindung an das Programm *MR32*.

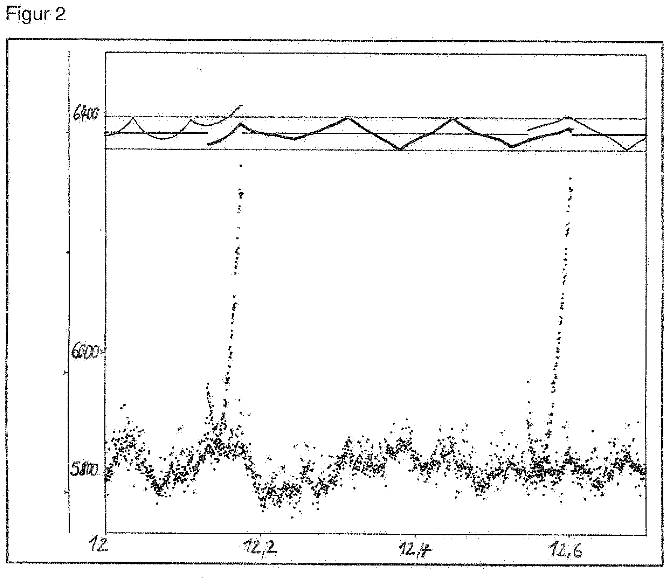

Die Vermessung der Fahrdrahthöhe mittels des Fächerlasers ist mit einem relativ großen Rauschen behaftet (Figur 2). Um die Qualität der Messergebnisse zu verbessern, ist es deshalb erforderlich, die Daten zu filtern. Hilfreich ist dabei die Tatsache, dass die Fahrdrahthöhe sich niemals sprunghaft ändern kann. Ausreißerwerte lassen sich aufgrund dieser Tatsache leicht erkennen.

Beim *Contact Wire Scanner* kommt eine Kombination aus Medianfilter und gleitender Mittelwertbildung zum Einsatz. Für jeden Fahrdraht werden die letzten fünf Werte für die Fahrdrahthöhe herangezogen. Diese Werte werden aufsteigend sortiert und anschließend der erste und letzte Wert gestrichen (Medianfilter). Die verbleibenden drei Messwerte werden gemittelt (gleitende Mittelwertbildung).

Auf diese Weise wird erreicht, dass Ausreißerwerte nicht in die Berechnung einfließen und gleichzeitig eine Mitteilung über mehrere Werte erfolgt, um einen geglätteten Fahrdrahtverlauf zu erhalten. Dennoch ist die Dynamik des Systems immer noch ausreichend hoch, da nur eine geringe Anzahl an Messwerten in die Filterung einfließt. Die Zeitkonstante des Filters beträgt bei einer Abtastrate von 100 Hz nur 0,05 sec. Das entspricht bei 100 km/h einer Strecke von etwa 1,40 m. In diesem Abstand erfolgt demnach stets eine komplette Neubestimmung der Fahrdrahtlage. Kommen zwei Laser zum Einsatz, halbiert sich die Distanz auf nur noch 70 cm bei 100 km/h.

Nachteil: Kleine Störstellen in der Oberleitung mit nur wenigen Zentimetern Ausdehnung kann das System aufgrund der Datenfilterung nur bei geringen Geschwindigkeiten erkennen.

### Direkte Sonneneinstrahlung / Blendfilter

Bei direktem Gegenlicht kann der Scanner keine Abstandswerte ermitteln, da der ausgesendete Laserstrahl bei direkter Sonneneinstrahlung für die Messvorrichtung nicht mehr erkennbar und das System damit durch die Sonne geblendet ist. Aus diesem Grund kommen in der Regel mindestens zwei Fächerlaser mit unterschiedlichen "Blickwinkeln" zur Oberleitung zum Einsatz. Auf diese Weise kann ein Ausfall des Messsystems durch direkte Sonneneinstrahlung ausgeschlossen werden.

Nur wenn sich der Fahrdraht direkt vor der Sonne befindet, fällt einer der Laser aus, womit für die Abtastung der Fahrdrahtlage nur noch einer der Scanner zur Verfügung steht und sich die Abtastrate somit halbiert. Da diese Konstellation jedoch nur selten auftritt, liefern in der Regel beide Scanner Daten für die Ermittlung der Fahrdrahtlage.

Direkte Sonneneinstrahlung kann der *Contact Wire Scanner* anhand der für diesen Fall charakteristischer Messwerte erkennen. Für jeden Scanner wird auf dieser Grundlage ein "Blinder Bereich" definiert, der in der Regel etwa einen Winkelbereich von etwa 3° bis 5° umfasst. Befindet sich ein vom System erkannter Fahrdraht innerhalb des "blinden Bereichs", so wird ausgehend vom bisherigen Fahrdrahtverlauf ein Erwartungswert bestimmt und in der Fahrdrahtmatrix abgelegt.

Gegenüber der Variante, den Fahrdraht aufgrund der Sonnenblendung als "verfehlt" zu definieren, ergibt sich daraus der Vorteil, dass der zweite Laser den Fahrdrahtverlauf anhand der berechneten, erwarteten Position besser nachverfolgen kann. Da die Fahrdrahtlage sich nicht sprunghaft ändert, sind durch Anwendung dieses Verfahrens keine unangemessen großen Messfehler zu erwarten. Solange der Fahrdraht tatsächlich vorhanden ist, kann dessen Verlauf somit optimal vermessen werden. Andernfalls würde durch die vielen Fehlmessungen die Wahrscheinlichkeit steigen, dass der Fahrdraht aufgrund zu häufiger Verfehlungen nicht mehr als solcher erkannt und somit aus der Fahrdrahtmatrix gestrichen wird.

### Masterkennung

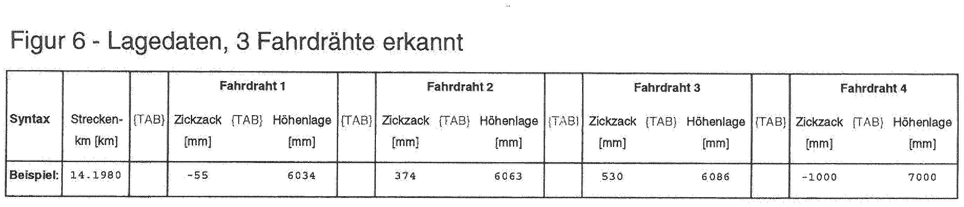

Der *Contact Wire Scanner* ist in der Lage, anhand des Fahrdrahtzickzacks die Positionen von Oberleitungsmasten zu erkennen. Erkannte Masten werden auf der Bedienoberfläche als blaue Nadelimpulse dargestellt (Fig. 6).

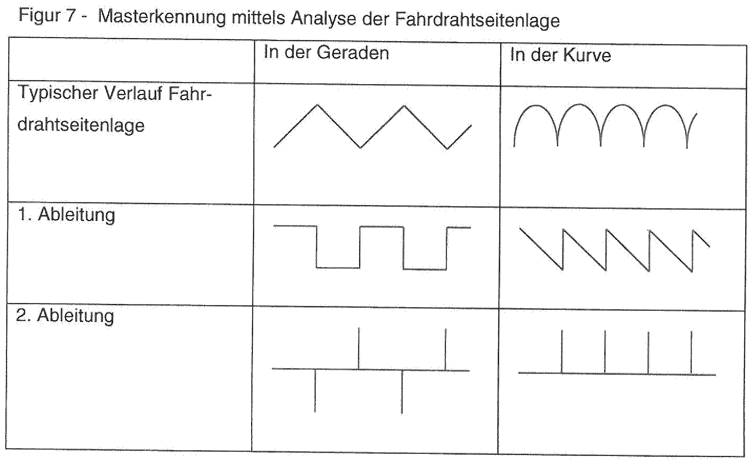

Zum Zwecke der Masterkennung wird der Verlauf der Fahrdrahtseitenlage zweimal abgeleitet. In Höhe der Mastpositionen ergeben sich in der zweiten Ableitung charakteristische Ausschläge im Funktionsverlauf (Figur 7). Zudem berechnet das Programm nach jedem Zyklus eine erwartete Fahrdrahtposition. Weicht.ein Wert nur geringfügig davon ab, wird der Funktionsverlauf zusätzlich geglättet (Rauschunterdrückung). Anhand des geglätteten Verlaufs lassen sich die markanten Impulse an den Maststandorten leichter filtern und identifizieren.

### Ausführungsbeispiel

Die Erfindung soll nachstehend anhand eines Ausführungsbeispiels näher erläutert werden.

Dabei zeigen:
- Figur 1 - eine für das Verfahren typische Systemkonfiguration
- Figur 2 - die ungefilterten Fahrdrahtlagedaten (Rohdaten)
- Figur 3 - die gefilterten Fahrdrahtlagedaten
- Figur 4 - das Fahrzeug in Ruhelage
- Figur 5 - ein wankendes Fahrzeug
- Figur 6 - Verlauf Fahrdrahtseitenlage und Masterkennung
- Figur 7 - Masterkennung

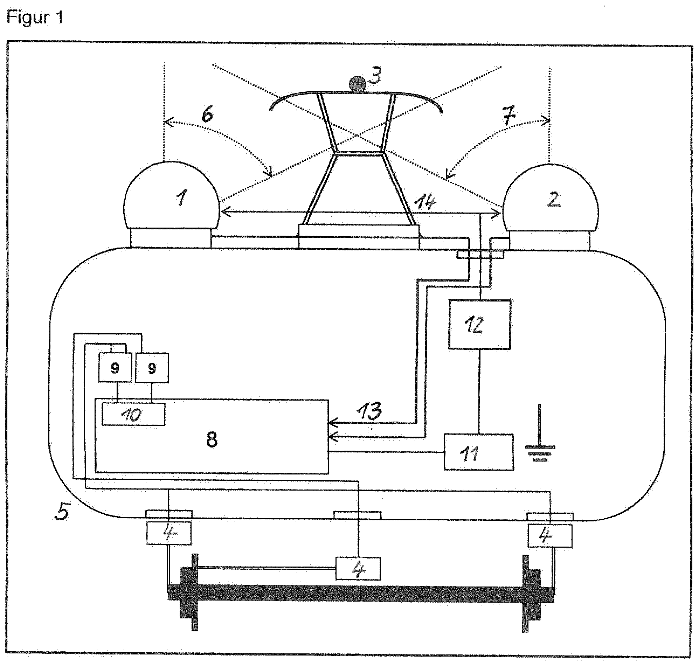

Figur 1 zeigt eine für das Verfahren typische Systemkonfiguration. Die Fächerlaser 1 und 2 sind auf dem Dach des Wagenkastens 5 montiert. Sie werden über die Anschlussleitungen 14 von einen Spannungswandler 12 mit Energie versorgt. Über ein Netzteil 11 wiederum werden Messrechner 8 und Spannungswandler 12 mit Strom gespeist. Die Fächerlaser 1 und 2 senden ihre Datentelegramme über Ethernetkabel 13 an den Messrechner 8.

Mittels eines rotierenden Spiegels tasten die Fächerlaser 1 und 2 ihre Umgebung zyklisch mit einer Schrittweite von 0,667° ab. Innerhalb der Messbereiche 6 und 7 der Fächerlaser 1 und 2 wird dabei auch der Fahrdraht 3 erfasst. Die Fahrdrahtlage ist mittels geeigneter Filteralgorithmen aus dem von den Fächerlasern 1 und 2 gelieferten Umgebungsprofil herauszufiltern.

Um das Wanken des Wagenkastens 5 (siehe Figur 5) messen zu können, wird die Relativbewegung zwischen Wagenkasten 5 und Radsatz 15 mittels Seilzugpotentiometern 4 bestimmt. Die Seilzugpotentiometer werden über Adaptermodule 9 mit Energie versorgt. Zudem kann der Messrechner 8 mittels eines Analog-Digitalwandlers 10 die akutellen Messergebnisse der Seilzugpotentiometern 4 über die Adaptermodule 9 einlesen und daraus das Wankverhalten des Wagenkastens 5 ableiten.

Durchführen einer Messung: Nach dem Start der Messung beginnen die Fächerlaser 1 und 2 mit dem Senden von Messdatentelegrammen, die Winkel- und Abstandswerte zu erkannten Objekten beinhalten, die sich innerhalb des Erfassungsbereichs des Fächerlasers befinden. Das Datentelegramm wird vom Messrechner 8 eingelesen und entschlüsselt.

Aus der Menge der im Datentelegramm enthaltenen Messpunkte, die das Umgebungsprofil oberhalb der Fächerlaser 1 und 2 wiederspiegeln, werden alle Punkte gelöscht, die sich nicht innerhalb des Erwartungsfensters für den Fahrdraht befinden.

Für bereits bekannte Fahrdrähte wird in der verbliebenen Menge von Messpunkten nach aktualisierten Lagedaten gesucht, indem das Programm an der erwarteten Stelle zuzüglich der erlaubten Lageänderung (dy < 5 cm, dx < 10 cm) nach einem Messpunkt sucht. Wird innerhalb der vorgegebenen Toleranzen ein Messpunkt gefunden, wird dieser Wert als neue Fahrdrahtlage in die Fahrdrahtmatrix übernommen. Werden mehrere potenzielle Messpunkte gefunden, wird der der erwarteten Position am nächsten gelegene Messpunkt als neue Fahrdrahtlage übernommen.

Wird kein Messpunkt gefunden, wird ein Erwartungswert (Fortführung des bisherigen Fahrdrahtverlaufs) berechnet, als neue Fahrdrahtlage in die Fahrdrahtmatrix übernommen und der Zähler für eine Fehlmessung inkrementiert. Nach zehn Fehlmessungen wird der Fahrdraht aus der Fahrdrahtmatrix gelöscht.

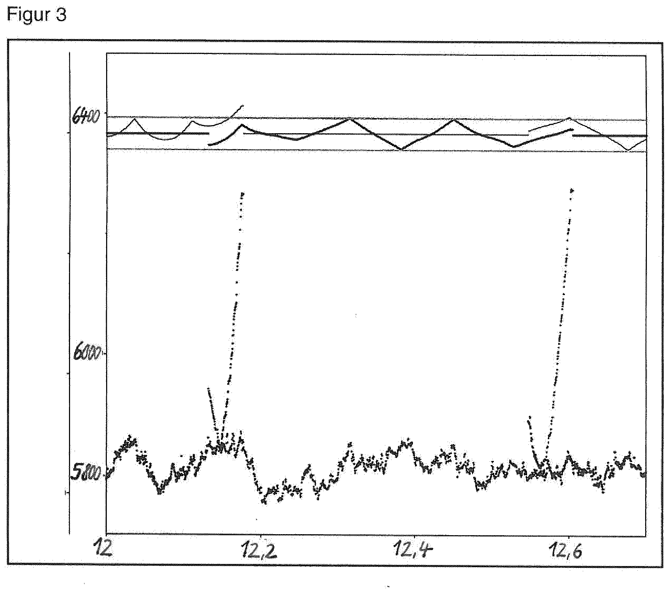

Zur Verbesserung der relativ stark verrauschten Rohdaten (siehe Figur 2) sind die Messergebnisse zu filtern. Hierbei kommt eine Kombination aus einem Medianfilter sowie einer gleitenden Mittelwertbildung zum Einsatz (siehe Figur 3).

Dabei zeigen die Figuren 2 und 3 die Fahrdrahtseitenlage 19 sowie die Fahrdrahthöhenlage 20, die über der Streckenkilometrieung 21 aufgetragen sind. Im Verlauf der dargestellten Messung hat das Messsystem die Fahrdrähte 16, 17 und 18 nachverfolgt.

Im Anschluss an die Datenfilterung wird der Fahrdrahtverlauf analysiert, zweimal abgeleitet und so das Vorhandensein eines Maststandorts geprüft (siehe Tabelle 2). Ein auf diese Weise erkannter Mast kann anderen Messmodulen über eine digital oder Analogschnittstelle z. B. zum Zwecke der Datenverortung bereitgestellt werden.

Im nächsten Schritt werden alle Messpunkte innerhalb des Erwartungsfensters für den Fahrdraht aus den letzten fünf Messzyklen übereinander gelegt und geclustert. Überall dort, wo sich ein Fahrdraht befindet, tritt eine Anhäufung von Punkten auf, während hingegen Regentropfen, Schneeflocken oder andere störende Objekte stochastisch verteilt auftreten. Tritt eine Punktanhäufung maximal 10 cm oberhalb des derzeit niedrigsten bekannten Fahrdrahts auf, werden die Koordinaten des Punktclusters gemittelt und als neuer, optionaler Fahrdraht in die Fahrdrahtmatrix übernommen. Sobald der optionale Fahrdraht in fünf weiteren, darauffolgenden Scans erfasst werden konnte, wird der Fahrdraht "gültig" und durch das Programm weiter nachverfolgt. Andernfalls wird der optionale. Fahrdraht wieder aus der Fahrdrahtmatrix gelöscht.

Unter den in der Fahrdrahtmatrix enthaltenen Fahrdrähten wird der niedrigste Fahrdraht ermittelt und als Hauptfahrdraht markiert. Beim Übergang zwischen zwei Fahrdrähten wird mittels einer Hysteresefunktion häufiges Hin- und Herspringen zwischen zwei Fahrdrähten im Übergangsbereich unterdrückt.

Die auf diese Weise ermittelten Fahrdrahtlagedaten lassen sich nun über digitale oder analoge Schnittstellen an andere, nachgelagerte Verarbeitungsprozesse übermitteln.

Zum einen können die Fahrdrahtlagedaten einfach auf einen Datenträger gespeichert, mit Positionsangaben oder Zeitstempeln versehen werden. Zwecks Kompensation der Wankbewegungen des Wagenkastens 5 sind die Fahrdrahtlagedaten an das Softwaremodul zur Wankkompensation weiterzureichen. Das Modul zur Wankkompensation überführt daraufhin die Lagedaten des Fahrdrahts vom xy-Koordinatensystem der Fächerlaser 1 und 2 in das relativ zur Schienenoberkante angeordnete x'y'-Koordinatensystem (siehe Figur 5).

## Patentansprüche

1. Verfahren zur Vermessung der Fahrdrahthöhen (y) und -seitenlage (x) der Oberleitung eines Gleises, wobei mittels eines rotierenden Spiegels eines Fächerlasers das Umgebungsprofil innerhalb eines vordefinierten Abtastbereichs erfasst und nach jedem Rundumscan durch den Scanner ein Datentelegramm mit Winkel- und Abstandswerten zu erkannten Oberflächen oder Objekten erstellt wird,
***gekennzeichnet dadurch, dass***
die Fahrdrähte durch mindestens zwei auf dem Dach eines Schienenfahrzeuges installierten Fächerlaser abgetastet werden, wobei die Abtastwinkel der Abtastlaserstrahlen im Falle von zwei verwendeten Fächerlasern zueinander eine Phasenverschiebung von 180° und bei mehr als zwei Fächerlasern eine Phasenverschiebung = 360° / Anzahl der verwendeten Laser aufweisen, und die Messung in drei Schritten erfolgt:
• **Bestimmung der Koordinaten von erkannten Objekten:** wobei die vom Fächerlaser gelieferten Polarkoordinaten zunächst in kartesische Koordinaten umgerechnet und um den Montageoffset des Lasers korrigiert werden, wobei die Montagehöhe zu dem vom Fächerlaser ermittelten Abstand zu den Fahrdrähten hinzuaddiert wird, um die Fahrdrahthöhe relativ zur Schienenoberkante zu ermitteln,
• **Selektion relevanter Objekte:** wobei eine Selektion derjenigen Messpunkte erfolgt, die innerhalb eines vordefinierten Erwartungsfensters, definiert durch minimale Fahrdrahtseitenlage < x < maximale Fahrdrahtseitenlage, und minimale Fahrdrahthöhenlage < y < maximale Fahrdrahthöhenlage, für die Fahrdrähte liegen und ein Selektionsfenster konfiguriert wird.
• **Fahrdrahtlagedaten aktualisieren**: wobei in der Menge der selektierten Punkte nach aktualisierten Lagedaten für bekannte Fahrdrähte gesucht wird und neu erkannte Fahrdrähte hinzugefügt werden.

2. Verfahren nach Anspruch 1, ***gekennzeichnet dadurch, dass*** eine Suche nach neuen Fahrdrähten dahingehend durchgeführt wird, dass diese in mindestens drei der letzten fünf Scans erkannt werden und somit mindestens drei Messpunkte für den neuen Fahrdraht aufgenommen werden.

3. Verfahren nach Anspruch 1, ***gekennzeichnet dadurch, dass*** zusätzliche Fahrdrähte nur dann hinzugefügt werden, wenn diese mindestens 15 cm vom nächstliegenden Fahrdraht verlaufen.

4. Verfahren nach Anspruch 1, ***gekennzeichnet dadurch, dass*** bei einer Selektierung von mehr als vier Fahrdrähten im Selektionsfenster die vier niedrigsten in der Fahrdrahtmatrix gespeichert werden.

5. Verfahren nach Anspruch 1, ***gekennzeichnet dadurch, dass*** zur Bestimmung eines Hauptfahrdrahtes der in der Fahrdrahtmatrix niedrigste Fahrdraht ermittelt wird, wobei dessen Zickzackauslenkung x maximal +/- 65 cm betragen darf.

6. Verfahren nach Anspruch 1, ***gekennzeichnet dadurch, dass*** bei einer Streckentrennung mit zwei parallel verlaufenden Leitungen beim Übergang von einem auf den anderen Hauptfahrdraht eine Hysteresefunktion verwendet wird.

7. Verfahren nach Anspruch 1, ***gekennzeichnet dadurch, dass*** nach Ermittlung eines Hauptfahrdrahtes die Selektion relevanter Objekte derart eingeschränkt wird, dass nur noch Messpunkte in die Betrachtung einfließen, die sich max. 10 cm oberhalb des Hauptfahrdrahtes befinden.

8. Verfahren nach Anspruch 1, ***gekennzeichnet dadurch, dass*** mittels mehrerer Wanksensoren die Bewegungen des Wagenkastens erfasst, daraus die Position der Flächenlaser relativ zur Schienenoberkante bestimmt, ausgewertet und die wankkompensierten Fahrdrahtlagedaten ausgegeben werden.

9. Verfahren nach Anspruch 1, ***gekennzeichnet dadurch, dass*** zum Zwecke einer Masterkennung der Verlauf der Fahrdrahtseitenlage zweimal abgeleitet und geglättet (Rauschunterdrückung) wird, wobei sich in der zweiten Ableitung charakteristische Ausschläge im Funktionsverlauf ergeben, die sich als Nadelimpulse darstellen.

10. Verfahren nach Anspruch 9, ***gekennzeichnet dadurch, dass*** durch direkte Sonneneinstrahlung verursachte Fehlmessungen automatisch erkannt und kompensiert werden.

## Claims

1. Method for measuring the contact wire heights (y) and lateral position (x) of the overhead line of a track, wherein by means of a rotating mirror of a fan angle laser the environmental profile within a predefined scanning area is detected and after each all-round scan with the scanner a data telegram is created with angular and distance values for recognised surfaces or objects,
**characterised in that**
the contact wires are scanned by at least two fan angle lasers installed on the roof of a rail vehicle, wherein the scanning angles of the scanning laser beams in the case of two fan angle lasers have a phase shift relative to one another of 180° and with more than two fan angle lasers a phase shift = 360° / number of lasers used,
and the measurement is performed in three steps:
• **determining the coordinates of identified objects:** wherein the polar coordinates supplied by the fan angle laser are first converted into Cartesian coordinates and corrected by the assembly offset of the laser, wherein the assembly height is added to the distance from the contact wires determined by the fan angle laser, in order to determine the contact wire height relative to the upper rail edge,
• **selection of relevant objects:** wherein a selection of such measurement points is performed which lie within a predefined expectation window, defined by a minimum contact wire lateral position < x < maximum contact wire lateral position, and minimum contact wire height < y < maximum contact wire height for the contact wires and a selection window is configured,
• **update contact wire position data:** wherein a search is carried within the selected points for updated position data for known contact wires and newly identified contact wires are added.

2. Method according to claim 1, **characterised in that** a search for new contact wires is performed such that the latter are identified in at least three of the last five scans and thus at least three measurement points are recorded for the new contact wire.

3. Method according to claim 1, **characterised in that** additional contact wires are only added if the latter are at least 15 cm from the closest contact wire.

4. Method according to claim 1, **characterised in that** with a selection of more than four contact wires in the selection window the four lowest contact wires are saved in the contact wire matrix.

5. Method according to claim 1, **characterised in that** to determine a main contact wire the lowest contact wire in the contact wire matrix is determined, wherein the zigzag deviation x of the latter can be a maximum of +/- 65 cm.

6. Method according to claim 1, **characterised in that** with an insulated overlap with two parallel lines at the transition from one main contact wire to the other a hysteresis function is used.

7. Method according to claim 1, **characterised in that** after a main contact wire is detected the selection of relevant objects is restricted in such a way that only measurement points are taken into consideration which are situated a maximum of 10 cm above the main contact wire.

8. Method according to claim 1, **characterised in that** by means of a plurality of roll sensors the movements of the vehicle body are detected, from which the position of the surface laser relative to the upper edge of the rails is determined, evaluated and the roll-compensated contact wire position data is output.

9. Method according to claim 1, **characterised in that** for the purpose of master detection the path of the contact wire lateral position is derived twice and smoothed (noise suppression), wherein characteristic deflections in the functional path are produced in the second derivation, which are represented as needle pulses.

10. Method according to claim 9, **characterised in that** measurement errors caused by direct radiation from the sun are detected and compensated automatically.

## Revendications

1. Procédé destiné à mesurer la hauteur (y) et le côté latéral (x) de fil conducteur de la caténaire d'un rail, dans lequel le profil environnemental est détecté à l'intérieur d'une zone de balayage prédéfinie au moyen d'un miroir rotatif d'un laser en éventail et un télégramme de données avec des valeurs d'angle et de distance relatives à des surfaces ou objets reconnus est établi après chaque scan rotatif par le scanner,
**caractérisé en ce que**
les fils conducteurs sont balayés par au moins deux lasers en éventail installés sur le toit d'un véhicule ferroviaire, dans lequel les angles de balayage des faisceaux de laser de balayage, dans le cas de deux lasers en éventail utilisés, présentent l'un par rapport à l'autre un décalage de phase de 180° et, dans le cas de plus de deux lasers en éventail, un décalage de phase = 360° / nombre de lasers utilisés, et la mesure s'effectue en trois étapes :
- **détermination des coordonnées d'objets reconnus** : dans lequel les coordonnées polaires fournies par le laser en éventail sont d'abord converties en coordonnées cartésiennes et corrigées du décalage de montage du laser, dans lequel la hauteur de montage est ajoutée à la distance déterminée par le laser en éventail par rapport aux fils conducteurs pour déterminer la hauteur de fil conducteur par rapport à l'arête supérieure de rail,
- **sélection d'objets pertinents** : dans lequel s'effectue une sélection des points de mesure qui se trouvent à l'intérieur d'une fenêtre d'attente prédéfinie, définie par côté latéral de fil conducteur minimum < x < côté latéral de fil conducteur maximum, et position de hauteur de fil conducteur minimum < y < position de hauteur de fil conducteur maximum, pour les fils conducteurs et une fenêtre de sélection est configurée.
- **actualisation des données de position de fil conducteur** : dans lequel des données de position actualisées pour des fils conducteurs connus sont recherchées dans la quantité de points sélectionnés et des fils conducteurs nouvellement reconnus sont ajoutés.

2. Procédé selon la revendication 1, **caractérisé en ce qu'**une recherche de nouveaux fils conducteurs est réalisée par le fait que ceux-ci sont reconnus dans au moins trois des cinq derniers scans et ainsi au moins trois points de mesure sont enregistrés pour le nouveau fil conducteur.

3. Procédé selon la revendication 1, **caractérisé en ce que** des fils conducteurs supplémentaires ne sont ajoutés que lorsque ceux-ci s'étendent au moins 15 cm du fil conducteur le plus proche.

4. Procédé selon la revendication 1, **caractérisé en ce que,** lors d'une sélection de plus de quatre fils conducteurs dans la fenêtre de sélection, les quatre plus bas sont enregistrés dans la matrice de fils conducteurs.

5. Procédé selon la revendication 1, **caractérisé en ce que,** pour la détermination d'un fil conducteur principal, le fil conducteur le plus bas dans la matrice de fils conducteurs est déterminé, dans lequel sa déviation en zigzag x doit être au maximum de +/- 65 cm.

6. Procédé selon la revendication 1, **caractérisé en ce qu'**une fonction hystérésis est utilisée lors d'une séparation de trajet avec deux lignes s'étendant en parallèle lors du passage d'un fil conducteur principal à l'autre.

7. Procédé selon la revendication 1, **caractérisé en ce qu'**après la détermination d'un fil conducteur principal, la sélection d'objets pertinents est limitée de telle sorte que seuls les points de mesure qui se trouvent à un maximum de 10 cm au-dessus du fil conducteur principal entrent encore en ligne de compte.

8. Procédé selon la revendication 1, **caractérisé en ce que** les mouvements de la caisse sont détectés au moyen de plusieurs capteurs de roulis, la position des lasers de surface par rapport à l'arête supérieure de rail en est déduite, évaluée et les données de position de fil conducteur à roulis compensé sont émises.

9. Procédé selon la revendication 1, **caractérisé en ce qu'**à des fins de reconnaissance de poteau, le tracé du côté latéral de fil conducteur est dérivé deux fois et lissé (suppression de bruit), dans lequel des déviations caractéristiques surviennent dans la courbe de fonction dans la dérivée seconde, qui sont représentées en tant qu'impulsions d'aiguille.

10. Procédé selon la revendication 9, **caractérisé en ce que** des erreurs de mesure provoquées par la lumière directe du soleil sont automatiquement reconnues et compensées.
